# FASCICULE DE BREVET EUROPEEN

(11) **EP 3 829 963 B1**
(45) Date de publication et mention de la délivrance du brevet: **14.06.2023**
(21) Numéro de dépôt: 19748581.6
(22) Date de dépôt: 05.07.2019
(51) Int. Cl.: B62D 35/02, B60R 19/18

(54) **VEHICULE AVEC DEFLECTEUR ARRIERE SOUS-PLANCHER MONTRANT UN CHANFREIN**
FAHRZEUG MIT HINTERER UNTERBODENVERKLEIDUNG MIT EINER ABFASUNG
VEHICLE WITH REAR UNDERFLOOR DEFLECTOR HAVING A CHAMFER

(30) Priorité: 02.08.2018 FR 1857237
(43) Date de publication de la demande: 09.06.2021
(73) Titulaire: PSA Automobiles SA, 78300 Poissy (FR)
(72) Inventeur: BERTH, Stéphane, 92320 CHATILLON (FR)
(86) Numéro de dépôt international: PCT/FR2019/051673
(87) Numéro de publication internationale: WO 2020/025870

(56) Documents cités:
- FR-A1- 2 987 805
- FR-A1- 2 987 806

## Description

L'invention se situe dans le domaine des véhicules et, plus particulièrement, des véhicules automobiles. L'invention a trait à un véhicule présentant un déflecteur sous-plancher agencé à l'arrière du véhicule.

Les déflecteurs sous-plancher arrière sont des pièces présentant une forme aérodynamique et destinés à améliorer les caractéristiques d'écoulement d'air de la partie arrière du véhicule. Les déflecteurs sous-plancher sont des panneaux, généralement en matériau plastique, ayant également une fonction de bouclier de protection contre les gravillons des éléments du véhicule implantés sous le plancher, tels que, par exemple, une batterie de propulsion. Ce type de déflecteur comprend généralement une portion avant adaptée pour être reliée au soubassement du véhicule et une portion arrière adaptée pour être reliée à un pare-chocs arrière du véhicule.

L'optimisation des processus de montage est un besoin constant et pour répondre à ce besoin, il est apparu qu'il pourrait être intéressant de monter le déflecteur arrière après un montage au moins partiel du pare-chocs. La portion arrière du déflecteur devant être agencée sous le bord de la jupe de pare-chocs, un problème rencontré alors est que l'environnement dans lequel se fait un tel montage est très encombré, notamment par la présence du dispositif de silencieux du véhicule, mais également par la présence d'une pluralité de goujons s'étendant depuis le soubassement du véhicule. Une solution reste donc à trouver pour faciliter le montage d'un tel déflecteur sous-plancher.

Le document EP1612128 décrit un véhicule équipé d'une structure de dessous de caisse incluant un panneau de plancher dont la partie arrière est augmentée pour former un plancher arrière, une paire de structures latérales arrières se prolongeant le long d'un axe longitudinal du véhicule à l'arrière du panneau de plancher.

Le brevet DE102005030419 décrit un véhicule, notamment un véhicule tout terrain ou pickup, équipé d'un dispositif anti-encastrement comprenant une plaque déflectrice montée sous la caisse du véhicule. L'invention vise à créer un dispositif anti-encastrement perfectionné. A cet effet, la plaque déflectrice est montée sous la caisse de manière mobile entre une position entrée et une position sortie.

Les documents FR2987806 et FR2987805 décrivent le préambule de la revendication indépendante, décrient un assemblage entre un premier déflecteur et un carénage situé sous le véhicule, à l'arrière dudit véhicule, fixés sur une traverse.

Aucun document ne propose de solution pour faciliter le montage d'un déflecteur une fois le pare-chocs positionné.

Il est donc nécessaire de trouver un moyen pour faciliter le montage d'une pièce déflectrice sous-plancher arrière tout en respectant les contraintes de l'implantation, notamment en prenant en compte la nécessité de pouvoir insérer le déflecteur dans son endroit final d'implantation et au vu de l'espace de manoeuvre très limité et sans abîmer les goujons s'étendant depuis la surface dudit plancher.

L'invention a pour objectif de répondre à au moins un des inconvénients de l'art antérieur en proposant un procédé de montage et un véhicule configuré pour faciliter le montage d'un déflecteur sur le pare-chocs et en particulier d'un déflecteur sous-plancher arrière sur une jupe de pare-chocs arrière et sur un panneau arrière.

A cet effet et selon un premier aspect, l'invention a pour objet un véhicule comprenant un panneau arrière de soubassement, une jupe de pare-chocs arrière et un déflecteur sous-plancher arrière, ledit panneau arrière et ladite jupe présentant des pattes de fixation, le déflecteur comprenant un bord arrière montrant une tranche et au moins une interface de fixation disposée intercalée entre les pattes de fixation du panneau arrière de soubassement et les pattes de fixation de la jupe de pare-chocs; le véhicule est remarquable en ce que la tranche du bord du déflecteur présente au moins un chanfrein au niveau d'une de ses interfaces de fixation afin de guider ledit bord arrière du déflecteur lors de son montage. Comme on l'aura compris à la définition qui vient d'en être donnée, l'invention consiste à doter le bord arrière du déflecteur d'au moins un chanfrein de manière à assister l'insertion dudit bord dans l'entrefer formé par les pattes de fixation du panneau arrière de soubassement et celles de la jupe de pare-chocs. La présence d'un chanfrein permet de guider le déflecteur dont le bord arrière risque de se placer en butée contre l'extrémité libre d'une desdites pattes de fixation afin qu'il se positionne correctement entre les deux pattes de fixation et non pas, par exemple, au-dessus de la patte de fixation de la jupe de pare-chocs ou en-dessous de la patte de fixation du panneau arrière de soubassement.

C'est pourquoi, selon un mode de réalisation préféré, le déflecteur sous-plancher arrière se présentant sous forme d'une plaque montrant une face supérieure et une face inférieure, la face inférieure étant orientée pour se placer en regard du sol, le véhicule est remarquable en ce que le ou lesdits chanfreins sont disposés sur la face supérieure.

De manière complémentaire ou alternative, le déflecteur sous-plancher arrière se présentant sous forme d'une plaque montrant une face supérieure et une face inférieure, la face inférieure étant orientée pour se placer en regard du sol, le véhicule est remarquable en ce que le ou lesdits chanfreins sont disposés sur la face inférieure.

Eventuellement, le déflecteur montre au niveau d'au moins une de ses interfaces de fixation une zone d'épaisseur réduite débouchant sur le bord dudit déflecteur, et l'interface de fixation présente un chanfrein de part et d'autre de ladite zone d'épaisseur réduite selon la direction transversale du véhicule.

Idéalement, le panneau arrière de soubassement, la jupe de pare-chocs arrière et le déflecteur sous-plancher arrière sont fixés ensemble par des moyens de fixation traversant des ajours montrés par les pattes de fixation et les interfaces de fixation.

Selon un deuxième aspect, l'invention concerne un déflecteur pour véhicule selon le premier aspect ; le déflecteur montrant une face supérieure et une face inférieure, la face inférieure étant destinée à être placée en regard du sol, le déflecteur est remarquable en ce qu'il comprend au moins une interface de fixation à un panneau arrière de soubassement et à une jupe de pare-chocs arrière, et en ce qu'il présente au moins un chanfrein au niveau d'une de ses interfaces de fixation afin de guider ledit bord du déflecteur lors de son montage. De préférence, le ou lesdits chanfreins sont disposés sur la face supérieure.

De manière préférentielle, le déflecteur présente des nervures de rigidification au niveau d'au moins une de ses interfaces de fixation.

Selon un troisième aspect, l'invention a pour objet un procédé de fabrication d'un déflecteur selon le deuxième aspect, le procédé étant remarquable en ce qu'il comprend la réalisation par moulage d'un chanfrein sur le bord arrière dudit déflecteur au niveau d'une de ses interfaces de fixation. De préférence, ledit déflecteur est réalisé en un matériau thermoplastique choisi parmi l'acrylonitrile butadiène styrène (ABS), le polypropylène (PP), le polyphtalamide (PPA), le polyétheréthercétone (PEEK), polysulfure de phénylène (PPS), le polyamide-imide (PAl), le polyetherimide (PEI), le polyarylamide (PAA), et/ou le polyamide (PA).

Selon un quatrième aspect, l'invention concerne un procédé de montage d'un déflecteur selon le deuxième aspect dans un véhicule selon le premier aspect, le véhicule comprenant en outre un silencieux disposé sur la surface du plancher destinée à venir en regard avec le sol, le procédé étant remarquable en ce qu'il comprend les étapes suivantes :
- montage partiel de la jupe de pare-chocs sur le véhicule ;
- mise en place du déflecteur par insertion de son bord arrière entre les pattes de fixation de la jupe de pare-chocs et les pattes de fixation du panneau arrière ;
- fixation de l'ensemble ;
et en ce qu'au moins une patte de fixation du panneau arrière et/ou de la jupe de pare-chocs coopère avec un chanfrein du déflecteur lors de l'étape de la mise en place dudit déflecteur.

De préférence, le déflecteur est mis en place par un mouvement d'avant en arrière en étant incliné par rapport à sa position finale.

L'invention sera bien comprise et d'autres aspects et avantages apparaîtront clairement à la lecture de la description qui suit donnée à titre d'exemple et en référence aux planches de dessins annexées selon lesquelles :
- La figure 1 est une vue du dessous d'une caisse de véhicule comprenant un plancher, un silencieux, un panneau arrière de soubassement, une peau de pare-chocs et un déflecteur selon l'invention.
- La figure 2 est une vue montrant un déflecteur selon l'invention destiné à être assemblé à une peau de pare-chocs et un panneau arrière de soubassement.
- La figure 3 est une vue d'une interface de fixation d'un déflecteur selon l'invention présentant deux chanfreins.
- La figure 4 est une vue de profil illustrant une interface de fixation d'un déflecteur selon l'invention destinée à glisser sur la patte de fixation d'une jupe de pare-chocs et à être intercalée entre celle-ci et la patte de fixation d'un panneau arrière de soubassement.

Dans la description qui suit, le terme « comprendre » est synonyme de « inclure » et n'est pas limitatif en ce qu'il autorise la présence d'autres éléments dans le véhicule, la jupe de pare-chocs ou le panneau arrière de soubassement auquel il fait référence. Il est entendu que le terme « comprendre » inclut les termes « consister en ». Sur les différentes figures, les mêmes références désignent des éléments identiques ou similaires. Les termes « inférieur », « supérieur », « avant », « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction. Sur les différentes figures, les mêmes références désignent des éléments identiques ou similaires.

Le véhicule et le procédé de montage du déflecteur sous-plancher arrière seront décrits conjointement.

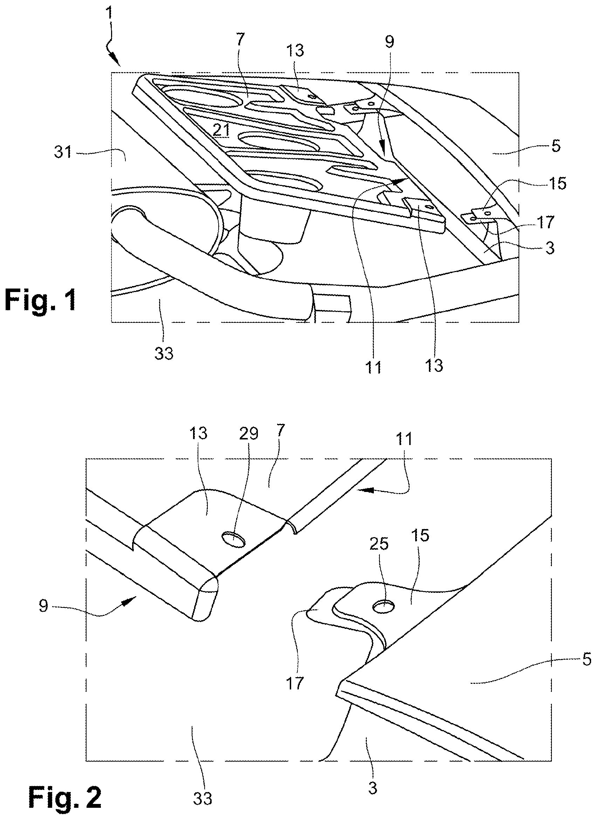

On se référera en premier lieu à la figure 1 illustrant un véhicule 1 selon l'invention, tel que vu de dessous pendant le montage d'un déflecteur 7 sous-plancher arrière. Le véhicule 1 comprend un plancher 33, un silencieux 31, un panneau arrière 3 de soubassement, une jupe 5 de pare-chocs et un déflecteur 7.

Le panneau arrière 3 et la jupe 5 de pare-chocs présentent chacun au moins une patte de fixation (15, 17) et, de préférence, au moins deux pattes. Lorsqu'ils présentent deux pattes de fixation ou plus, celles-ci sont réparties sur l'élément les montrant selon la direction transversale du véhicule 1. Les pattes de fixation (15, 17) sont disposées en regard l'une par rapport à l'autre et sont espacées selon la direction verticale dudit véhicule de sorte à montrer un entrefer avant leur assemblage définitif.

Le déflecteur 7 comprend une portion avant adaptée pour être reliée au plancher 33 du véhicule, et une portion arrière adaptée pour être reliée à un pare-chocs arrière du véhicule.

En figure 2, le bord arrière 9 du déflecteur 7 montre une tranche 11 et au moins une interface de fixation 13 disposée pour s'intercaler entre les pattes de fixation 17 du panneau arrière 3 de soubassement et les pattes de fixation 15 de la jupe 5 de pare-chocs. Le déflecteur comprend au moins une interface de fixation 13 et, de préférence, au moins deux interfaces de fixation 13. Lesdites interfaces 13 sont positionnées sur le bord 9 arrière pour être en regard des pattes de fixation 17 du panneau arrière 3 et des pattes de fixation 15 de la jupe 5 de pare-chocs. D'ailleurs, l'interface de fixation est dimensionnée pour s'insérer « en sandwich » dans l'entrefer formé par ladite paire de pattes de fixation (15, 17) avant l'assemblage final.

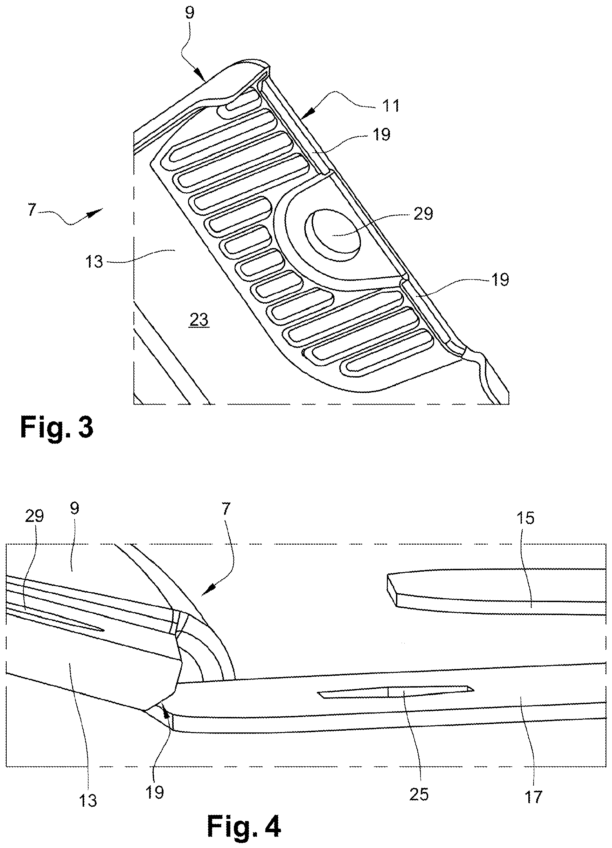

Selon l'invention, la tranche 11 du bord arrière 9 du déflecteur 7 présente au moins un chanfrein 19 au niveau d'une de ses interfaces de fixation 13 afin de guider ledit bord 9 du déflecteur 7 lors de son montage, tel qu'illustré en figures 3 et 4. Le chanfrein 19 a comme fonction d'assister l'insertion dudit bord 9 dans l'entrefer formé par les pattes de fixation (15, 17) du panneau arrière 3 de soubassement et celles de la jupe 5 de pare-chocs. La présence d'un chanfrein 19 permet de guider le déflecteur 7 afin d'éviter que son bord arrière 9 ne se place en butée contre l'extrémité libre de la patte de fixation 17 du panneau arrière 3. La présence du chanfrein 19 facilite un mouvement de glissement le long de ladite patte 17 et assure que le bord arrière 9 du déflecteur 7 passe en dessous de la patte de fixation 17 du panneau arrière 3 et non pas au-dessus. En l'absence d'un tel chanfrein 19, le bord arrière du déflecteur 7 viendrait buter contre la patte de fixation 17 et serait difficilement monté par l'opérateur, voire ne pourrait plus être introduit dans son endroit d'implantation.

Chaque interface de fixation du déflecteur 7 présente donc au moins un chanfrein 19 et, de préférence, en présente deux.

Le déflecteur 7 sous-plancher arrière se présentant sous forme d'une plaque montrant une face supérieure 23 et une face inférieure 21, la face inférieure 21 (illustrée en figure 1) étant orientée pour se placer en regard du sol. Le ou lesdits chanfreins 19 sont disposés sur la face supérieure 23, tel qu'illustré en figure 3.

Selon un mode de réalisation alternatif ou complémentaire non illustré, le ou lesdits chanfreins sont disposés sur la face inférieure.

Le déflecteur 7 montre au niveau d'au moins une de ses interfaces de fixation 13, une zone d'épaisseur réduite débouchant sur le bord 9 dudit déflecteur 7. De préférence, chaque interface présente une telle zone d'épaisseur réduite. Ladite zone est bordée de part et d'autre d'un chanfrein 19 selon la direction transversale du véhicule. C'est cette zone d'épaisseur réduite qui est disposée en regard des pattes de fixation (15, 17).

Selon les figures 2 et 4, pour assurer l'assemblage des trois éléments, c'est-à-dire l'assemblage du déflecteur 7 entre le panneau arrière 3 de soubassement et la jupe 5 de pare-chocs, l'interface de fixation 13 et les pattes de fixation (15, 17) montrent un ajour (25, 27, 29), les trois ajours étant disposés alignés selon la direction verticale du véhicule. Ainsi, un moyen de fixation, tel qu'un système vis-écrou, traversera les trois ajours afin de les assembler.

Bien évidemment, l'homme du métier remplacera sans peine le moyen de fixation par d'autres systèmes adaptés à ses besoins. L'assemblage peut s'effectuer, par exemple, par collage.

Le déflecteur 7 présente avantageusement des nervures de rigidification au niveau d'au moins une de ses interfaces de fixation 13. Leur présence sert à répartir l'effort subi par la pièce lors d'un choc arrière et, ainsi, de protéger les éléments environnants sensibles, tel que le silencieux 31.

De préférence, le déflecteur 7 est réalisé par moulage, et le ou les chanfreins 19 seront réalisés directement par moulage et non pas par fraisage ultérieur. Bien évidemment, l'homme du métier peut également choisir de les réaliser par fraisage.

Ledit déflecteur 7 est réalisé en un matériau plastique et, de préférence, thermoplastique choisi parmi l'acrylonitrile butadiène styrène (ABS), le polypropylène (PP), le polyphtalamide (PPA), le polyétheréthercétone (PEEK), polysulfure de phénylène (PPS), le polyamide-imide (PAl), le polyetherimide (PEI), le polyarylamide (PAA), et/ou le polyamide (PA).

Pour monter le déflecteur 7 dans un véhicule 1, l'opérateur doit d'abord procéder au montage partiel de la jupe 5 de pare-chocs sur le véhicule 1, mettre en place le déflecteur 7 par insertion de son bord 9 arrière entre les pattes de fixation 15 de la jupe 5 de pare-chocs et les pattes de fixation 17 du panneau arrière 3 et les fixer ensemble. Le déflecteur 7 est mis en place par un mouvement d'avant en arrière en étant incliné par rapport à sa position finale. Son positionnement en biais est préférable lorsqu'une pluralité de goujons (non illustrés) s'étendent depuis la surface du plancher 33, lesdits goujons étant donc configurés pour être assemblés avec la partie avant du déflecteur 7. Ainsi, lors de l'étape de la mise en place dudit déflecteur 7, au moins une patte de fixation 17 du panneau arrière 3 coopère avec un chanfrein 19 dudit déflecteur 7. Le chanfrein va glisser le long de ladite patte 17 pour permettre l'insertion de l'interface de fixation 13 dans l'entrefer créé préalablement entre les pattes de fixation (15, 17).

## Revendications

1. Véhicule (1) comprenant un panneau arrière (3) de soubassement, une jupe (5) de pare-chocs arrière et un déflecteur (7) sous-plancher arrière, ledit panneau arrière (3) et ladite jupe (5) présentant des pattes de fixation (15, 17), le déflecteur (7) comprenant un bord (9) arrière montrant une tranche (11) et au moins une interface de fixation (13) disposée intercalée entre les pattes de fixation (17) du panneau arrière (3) de soubassement et les pattes de fixation (15) de la jupe (5) de pare-chocs; le véhicule (1) est **caractérisé en ce que** la tranche (11) du bord (9) du déflecteur (7) présente au moins un chanfrein (19) au niveau d'une de ses interfaces de fixation (13) afin de guider ledit bord (9) arrière du déflecteur (7) lors de son montage.

2. Véhicule (1) selon la revendication 1, le déflecteur (7) sous-plancher arrière se présentant sous forme d'une plaque montrant une face supérieure (23) et une face inférieure (21), la face inférieure (21) étant orientée pour se placer en regard du sol, le véhicule (1) est **caractérisé en ce que** le ou lesdits chanfreins (19) sont disposés sur la face supérieure (23).

3. Véhicule (1) selon la revendication 1 ou 2, le déflecteur (7) sous-plancher arrière se présentant sous forme d'une plaque montrant une face supérieure (23) et une face inférieure (21), la face inférieure (21) étant orientée pour se placer en regard du sol, le véhicule (1) est **caractérisé en ce que** le ou lesdits chanfreins (19) sont disposés sur la face inférieure (21).

4. Véhicule (1) selon l'une des revendications 1 à 3, **caractérisé en ce que** le déflecteur (7) montre au niveau d'au moins une de ses interfaces de fixation (13) une zone d'épaisseur réduite débouchant sur le bord (9) dudit déflecteur (7), et **en ce que** l'interface de fixation (13) présente un chanfrein (19) de part et d'autre de ladite zone d'épaisseur réduite selon la direction transversale du véhicule.

5. Véhicule (1) selon l'une des revendications 1 à 4, **caractérisé en ce que** le panneau arrière (3) de soubassement, la jupe (5) de pare-chocs arrière et le déflecteur (7) sous-plancher arrière sont fixés ensemble par des moyens de fixation traversant des ajours (25, 27, 29) montrés par les pattes de fixation (15, 17) et les interfaces de fixation (13).

6. Déflecteur (7) pour véhicule (1) selon l'une des revendications 1 à 5, le déflecteur (7) montrant une face supérieure (23) et une face inférieure (21), la face inférieure (21) étant destinée à être placée en regard du sol, le déflecteur (7) est **caractérisé en ce qu'**il comprend au moins une interface de fixation (13) à un panneau arrière (3) de soubassement et à une jupe (5) de pare-chocs arrière, et **en ce qu'**il présente au moins un chanfrein (19) au niveau d'une de ses interfaces de fixation (13) afin de guider ledit bord (9) du déflecteur (7) lors de son montage ; de préférence, le ou lesdits chanfreins (19) sont disposés sur la face supérieure (23).

7. Déflecteur (7) selon la revendication 6 **caractérisé en ce qu'**il présente des nervures de rigidification au niveau d'au moins une de ses interfaces de fixation (13).

8. Procédé de fabrication d'un déflecteur (7) selon la revendication 6 ou 7, **caractérisé en ce qu'**il comprend la réalisation par moulage d'un chanfrein (19) sur le bord arrière (9) dudit déflecteur (7) au niveau d'une de ses interfaces de fixation (13); de préférence ledit déflecteur (7) est réalisé en un matériau thermoplastique choisi parmi l'acrylonitrile butadiène styrène (ABS), le polypropylène (PP), le polyphtalamide (PPA), le polyétheréthercétone (PEEK), polysulfure de phénylène (PPS), le polyamide-imide (PAl), le polyetherimide (PEI), le polyarylamide (PAA), et/ou le polyamide (PA).

9. Procédé de montage d'un déflecteur (7) selon la revendication 6 ou 7 dans un véhicule selon l'une des revendications 1 à 5, le véhicule comprenant en outre un silencieux (31) disposé sur la surface du plancher (33) destinée à venir en regard avec le sol, le procédé étant **caractérisé en ce qu'**il comprend les étapes suivantes :
- montage partiel de la jupe (5) de pare-chocs sur le véhicule (1);
- mise en place du déflecteur (7) par insertion de son bord (9) arrière entre les pattes de fixation (15) de la jupe (5) de pare-chocs et les pattes de fixation (17) du panneau arrière (3);
- fixation de l'ensemble ;
et **en ce qu'**au moins une patte de fixation (15, 17) du panneau arrière (3) et/ou de la jupe (5) de pare-chocs coopère avec un chanfrein (19) du déflecteur (7) lors de l'étape de la mise en place dudit déflecteur (7).

10. Procédé selon la revendication 9, **caractérisé en ce que** le déflecteur (7) est mis en place par un mouvement d'avant en arrière en étant incliné par rapport à sa position finale.

## Patentansprüche

1. Fahrzeug (1) mit einer hinteren Bodenplatte (3), einer hinteren Stoßfängerschürze (5) und einer hinteren Unterbodenablenkplatte (7), wobei die hintere Bodenplatte (3) und die Schürze (5) Befestigungslaschen (15, 17) aufweisen, wobei die Ablenkplatte (7) eine hintere Kante (9), die eine Scheibe (11) aufweist, und mindestens eine Befestigungsschnittstelle (13) aufweist, die zwischen den Befestigungslaschen (17) der hinteren Bodenplatte (3) und den Befestigungslaschen (15) der Schürze (5) angeordnet ist Stoßfänger; das Fahrzeug (1) ist **dadurch gekennzeichnet, dass** die Kante (11) des Randes (9) des Deflektors (7) mindestens eine Abschrägung (19) an einer ihrer Befestigungsschnittstellen (13) aufweist, um den hinteren Rand (9) des Deflektors (7) bei seiner Montage zu führen.

2. Fahrzeug (1) nach Anspruch 1, wobei die hintere Ablenkplatte (7) in Form einer Platte vorliegt, die eine Oberseite (23) und eine Unterseite (21) aufweist, wobei die Unterseite (21) so ausgerichtet ist, dass sie dem Boden zugewandt ist, und das Fahrzeug (1) **dadurch gekennzeichnet ist, dass** die Abschrägung oder die Abschrägungen (19) auf der Oberseite (23) angeordnet sind.

3. Fahrzeug (1) nach Anspruch 1 oder 2, wobei die hintere Ablenkplatte (7) in Form einer Platte vorliegt, die eine Oberseite (23) und eine Unterseite (21) aufweist, wobei die Unterseite (21) so ausgerichtet ist, dass sie dem Boden zugewandt ist, und das Fahrzeug (1) **dadurch gekennzeichnet ist, dass** die wenigstens eine Abschrägung (19) auf der Unterseite (21) angeordnet ist.

4. Fahrzeug (1) nach einem der Ansprüche 1 bis 3, **dadurch gekennzeichnet, dass** der Abweiser (7) an mindestens einer seiner Befestigungsschnittstellen (13) eine Zone mit verringerter Dicke aufweist, die auf den Rand (9) des Abweisers (7) mündet, und dass die Befestigungsschnittstelle (13) eine Abschrägung (19) auf beiden Seiten der Zone mit verringerter Dicke in der Querrichtung des Fahrzeugs aufweist.

5. Fahrzeug (1) nach einem der Ansprüche 1 bis 4, **dadurch gekennzeichnet, dass** die hintere Bodenplatte (3), die hintere Stoßfängerschürze (5) und der hintere Unterbodenabweiser (7) gemeinsam durch Befestigungsmittel befestigt sind, die Durchbrüche (25, 27, 29) durchqueren, die von den Befestigungslaschen (15, 17) und den Befestigungsschnittstellen (13) gezeigt werden.

6. Deflektor (7) für ein Fahrzeug (1) nach einem der Ansprüche 1 bis 5, wobei der Deflektor (7) eine Oberseite (23) und eine Unterseite (21) aufweist, wobei die Unterseite (21) dazu bestimmt ist, dem Boden zugewandt angeordnet zu werden, wobei der Deflektor (7) **dadurch gekennzeichnet ist, dass** er mindestens eine Befestigungsschnittstelle (13) an einer hinteren Bodenplatte (3) und einer hinteren Stoßstangenschürze (5) aufweist, und dass er mindestens eine Abschrägung (19) an einer seiner Befestigungsschnittstellen (13) aufweist Zur Führung des Randes (9) des Deflektors (7) bei dessen Montage sind vorzugsweise die wenigstens eine Fase (19) an der Oberseite (23) angeordnet.

7. Deflektor (7) nach Anspruch 6, **dadurch gekennzeichnet, dass** er Versteifungsrippen an mindestens einer seiner Befestigungsflächen (13) aufweist.

8. Verfahren zur Herstellung eines Deflektors (7) nach Anspruch 6 oder 7, **dadurch gekennzeichnet, dass** es die Herstellung einer Abschrägung (19) an der Hinterkante (9) des Deflektors (7) an einer seiner Befestigungsflächen (13) umfasst; vorzugsweise ist der Deflektor (7) aus einem thermoplastischen Material hergestellt, das unter AcrylnitrilButadien-Styrol (ABS), Polypropylen (PP), Polyphthalamid (PPA), Polyetheretherketon (PEEK), Polyphenylensulfid (PPS) ausgewählt ist, Polyamidimid (PAI), Polyetherimid (PEI), Polyarylamid (PAA) und/oder Polyamid (PA).

9. Verfahren zur Montage einer Ablenkvorrichtung (7) nach Anspruch 6 oder 7 in einem Fahrzeug nach einem der Ansprüche 1 bis 5, wobei das Fahrzeug ferner einen Schalldämpfer (31) umfasst, der auf der Oberfläche des Bodens (33) angeordnet ist, um dem Boden zugewandt zu sein, wobei das Verfahren **dadurch gekennzeichnet ist, dass** es die folgenden Schritte umfasst:
- Teilmontage der Stoßfängerschürze (5) am Fahrzeug (1);
- Einsetzen des Abweisers (7) durch Einsetzen seines hinteren Randes (9) zwischen die Befestigungslaschen (15) der Stoßfängerschürze (5) und die Befestigungslaschen (17) der Rückwand (3);
- Befestigung der Baugruppe;
und **dadurch gekennzeichnet, dass** wenigstens eine Befestigungslasche (15, 17) der Rückwand (3) und/oder der Stoßfängerschürze (5) mit einer Fase (19) des Deflektors (7) im Schritt des Ansetzens des Deflektors (7) zusammenwirkt.

10. Verfahren nach Anspruch 9, **dadurch gekennzeichnet, dass** der Abweiser (7) durch eine Vorwärts- und Rückwärtsbewegung in einer Neigung gegenüber seiner Endposition eingesetzt wird.position.

## Claims

1. A vehicle (1) comprising a rear underbody panel (3), a rear bumper skirt (5) and a rear underfloor deflector (7), said rear panel (3) and said skirt (5) having fixing tabs (15, 17), the deflector (7) comprising a rear edge (9) showing an edge (11) and at least one fixing interface (13) arranged between the fixing tabs (17) of the rear underbody panel (3) and the fixing tabs (15) of the skirt (5) of the bumper impact; the vehicle (1) is **characterized in that** the edge (11) of the edge (9) of the deflector (7) has at least one chamfer (19) at one of its attachment interfaces (13) in order to guide said rear edge (9) of the deflector (7) during its mounting.

2. Vehicle (1) according to Claim 1, the rear subfloor deflector (7) being in the form of a plate showing an upper face (23) and a lower face (21), the lower face (21) being oriented so as to be placed facing the ground, the vehicle (1) is **characterized in that** the said chamfer or chamfers (19) are arranged on the upper face (23).

3. Vehicle (1) according to Claim 1 or 2, the rear subfloor deflector (7) being in the form of a plate showing an upper face (23) and a lower face (21), the lower face (21) being oriented so as to be placed facing the ground, the vehicle (1) is **characterized in that** the said chamfer or chamfers (19) are arranged on the lower face (21).

4. Vehicle (1) according to one of Claims 1 to 3, **characterized in that** the deflector (7) shows, at at at least one of its fixing interfaces (13), a zone of reduced thickness opening onto the edge (9) of the said deflector (7), and **in that** the fixing interface (13) has a chamfer (19) on either side of the said zone of reduced thickness in the transverse direction of the vehicle.

5. Vehicle (1) according to one of Claims 1 to 4, **characterized in that** the rear underframe panel (3), the rear bumper skirt (5) and the rear underfloor deflector (7) are fixed together by fixing means passing through openings (25, 27, 29) shown by the fixing lugs (15, 17) and the fixing interfaces (13).

6. Deflector (7) for a vehicle (1) according to one of Claims 1 to 5, the deflector (7) showing an upper face (23) and a lower face (21), the lower face (21) being intended to be placed facing the ground, the deflector (7) is **characterized in that** it comprises at least one fixing interface (13) to a rear underframe panel (3) and to a rear bumper skirt (5), and **in that** it has at least one chamfer (19) at one of its fixing interfaces (13) in order to guiding said edge (9) of the deflector (7) during its mounting; preferably, said chamfer or chamfers (19) are arranged on the upper face (23).

7. Deflector (7) according to Claim 6, **characterized in that** it has stiffening ribs at at least one of its fixing interfaces (13).

8. Process for the manufacture of a deflector (7) according to Claim 6 or 7, **characterized in that** it comprises the production by molding of a chamfer (19) on the rear edge (9) of the said deflector (7) at one of its fixing interfaces (13); preferably the said deflector (7) is produced from a thermoplastic material chosen from acrylonitrile butadiene styrene (ABS), polypropylene (PP), polyphthalamide (PPA), polyetheretherketone (PEEK), phenylene polysulfide (PPS) and polyamide-imide (PAP) I), polyetherimide (PEI), polyarylamide (PAA), and/or polyamide (PA).

9. Method of mounting a deflector (7) according to Claim 6 or 7 in a vehicle according to one of Claims 1 to 5, the vehicle further comprising a silencer (31) arranged on the surface of the floor (33) intended to face the ground, the method being **characterized in that** it comprises the following steps:
- partial mounting of the bumper skirt (5) on the vehicle (1);
- fitting the deflector (7) by inserting its rear edge (9) between the fixing lugs (15) of the bumper skirt (5) and the fixing lugs (17) of the rear panel (3);
- fixing the assembly;
and **in that** at least one fixing lug (15, 17) of the rear panel (3) and/or of the skirt (5) of the bumper cooperates with a chamfer (19) of the deflector (7) during the step of positioning said deflector (7).

10. Method according to Claim 9, **characterized in that** the deflector (7) is put into place by a movement from front to rear while being inclined with respect to its final position.
